# EUROPÄISCHE PATENTANMELDUNG

(11) **EP 2 428 652 A1**
(43) Veröffentlichungstag der Anmeldung: **14.03.2012**
(21) Anmeldenummer: 10176190.6
(22) Anmeldetag: 10.09.2010
(51) Int. Cl.: F01D 25/28, F01D 25/24, F01D 25/16

(54) **Dämpfungssystem zur Anbindung eines ersten Bauteils mit einem zweiten Bauteil**

(71) Anmelder: Siemens Aktiengesellschaft, 80333 München (DE)
(72) Erfinder: Lüneburg, Bernd, 45481 Mülheim an der Ruhr (DE); ter Beek, Marc, 46399 Bocholt (DE); Müller, Hartmut, 45473 Mülheim an der Ruhr (DE)

(57) **Zusammenfassung**

Die Erfindung betrifft ein Dämpfungssystem (6) zur Anbindung eines ersten Bauteils (3) mit einem zweiten Bauteil (5), wobei zwischen dem ersten Bauteil, z.B. einem Lagergehäuse (3) einer Dampfturbine, und dem zweiten Bauteil, z.B. einem Gehäuse (5), ein Verbindungselement (7) angeordnet ist, wobei das Verbindungselement (7) ein mit dem ersten Bauteil (3) verbindbares Grundelement (8) und ein mit dem zweiten Bauteil (5) verbindbares Auflageelement (9) aufweist, wobei zwischen dem Grundelement (8) und dem Auflageelement (9) ein Dämpfungsmittel (10) angeordnet ist, das aus einem elastischen Material ausgebildet ist, um Schwingungen zwischen dem ersten (3) und dem zweiten Bauteil (5) zu verhindern.

## Beschreibung

Die Erfindung betrifft ein System zur Anbindung eines ersten Bauteils mit einem zweiten Bauteil. Im modernen Maschinenbau wie z.B. beim Turbomaschinen-Bau werden in der Regel Bauteile verwendet, die ein vgl. hohes Gewicht aufweisen. In der Regel umfasst eine Turbomaschine ein drehbar gelagertes und ein feststehendes Bauteil, das um das drehbar gelagerte Bauteil angeordnet ist. In Folge des hohen Gewichts der drehbaren Bauteile, wie z.B. der Rotoren, werden geeignete Radialgleitlager verwendet, die allerdings zu Stabilitätsproblemen während des Betriebes neigen können. Die vorgenannten Stabilitätsprobleme äußern sich in Wellenschwingungen, die unter bestimmten Bedingungen nicht drehzahlsynchron sind. Ein weiteres Problem während des Betriebes können Eigenschwingungen der Lager sein, die bei nicht fixierten Lagern eventuell auftreten können. Daher wären Fixierungen der Lager eine konstruktive Lösung um solche Stabilitätsprobleme zu lösen. Allerdings sind die Fixierungen der Lager konstruktiv aufwändig, da die Wärmedehnung der einzelnen Bauteile nicht behindert werden soll, um unzulässige Verformungen oder Spannungen zu vermeiden. Des Weiteren muss eine Fixierung fest ausgeführt werden und darüber hinaus vergleichsweise hohen statischen und dynamischen Kräften widerstehen. Bei der Montage können starren Fixierungen zu Problemen führen. Ein weiteres Problem stellt die Übertragung von Körperschall dar, die zu ungewünschten akustischen Effekten führen kann.

Zur Aufnahme der thermischen Dehnungen, zur Vermeidung von statischen Verzwängungen und zur Erleichterung der Montage wird die starre Fixierung von Lagern in vergleichsweise gro-βen Turbomaschinen in der Regel vermieden. Vielmehr erfolgt die Anbindung der Lager spielbehaftet. Dazu werden im Betrieb durch die thermischen Differenzdehnungen auftretenden Ausdehnungen der Kontaktpartner, wie z.B. das Lager und das Lagergehäuse nach theoretischen Modellen abgeschätzt, um ein möglichst geringes Spiel während des Betriebes zu gewährleisten bzw. um möglicher Weise auftretende Verformungen und Spannungen in zulässigen Bereichen zu halten.

Bei der spielbehafteten Montage können allerdings ungewünschte Verlagerungen der Lager im Rahmen der Spiele auftreten, die auch als Fehlstellungen der Lager bezeichnet werden können. Diese Verlagerungen der Lager können das Laufverhalten beeinträchtigen und sollten vermieden werden. Das vorgenannte Problem tritt nicht nur bei vergleichsweise leicht belasteten, sondern ebenfalls bei hoch belasteten Lagern auf.

Sowohl bei der starren Fixierung als auch bei der spielbehafteten Anbindung können Probleme auftauchen, die im Einzelfall durch Nacharbeit, Korrektur der Ausrichtung, Versatz der Schwingungsgeber oder nachträgliche Änderungen der Konstruktion gelöst werden müssen.

Die Erfindung hat es sich zur Aufgabe gestellt, eine Anbindung eines ersten Bauteils an einem zweiten Bauteil anzugeben, das zu einer geringen Schwingungsneigung der Bauteile führt.

Gelöst wird diese Aufgabe durch ein System zur Anbindung eines ersten Bauteils mit einem zweiten Bauteil, wobei zwischen dem ersten Bauteil und dem zweiten Bauteil ein Verbindungselement angeordnet ist, wobei das Verbindungselement ein mit dem ersten Bauteil verbindbares Grundelement und ein mit dem zweiten Bauteil verbindbares Auflageelement aufweist, wobei zwischen dem Grundelement und dem Auflageelement ein Dämpfungsmittel angeordnet ist.

Das Dämpfungsmittel ist aus einem elastischen Material ausgebildet.

Durch die Erfindung wird ein spielfreier Betrieb gewährleistet, da die Bauteile über das System aneinanderliegen. Dazu wird bei einer Beibehaltung der Wärmebeweglichkeit das erste Bauteil über das elastische Material, das als Dämpfungsmittel ausgebildet ist, beibehalten.

Der Vorteil der Erfindung liegt darin, dass die dynamische Stabilität des Lagers erfindungsgemäß vergrößert wird, bei einer gleichzeitigen Funktionalität des Gleitlagers, die nicht beeinflusst wird. Ebenso werden übertragende Störfallkräfte nicht beeinflusst. Ein weiterer Vorteil ist, dass die Wärmebeweglichkeit erhalten bleibt ohne zusätzliche Verformungen oder Spannungsaufbau des ersten Bauteils oder des zweiten Bauteils. Ebenso ist eine akustische Entkopplung gegeben, da über das elastische Material Schwingungen wirksam entkoppelt werden. Ein weiterer Vorteil ist, dass eine spielfreie Montage möglich ist, was dazu führt, dass hier eine vergleichsweise einfache Servicelösung, d.h. die Erfindung kann in vorhandene Strukturen eingebracht werden, vorhanden ist. Darüber hinaus ist die erfindungsgemäße Lösung vergleichsweise preiswert.

Vorteilhafte Weiterbildungen sind in den Unteransprüchen angegeben.

So besteht eine vorteilhafte Weiterbildung darin, dass als Dämpfungsmittel ein Elastomer verwendet wird, wie z. B. ein zelliges Polyurethan, das volumenkompressibel ist.

In einer vorteilhaften Weiterbildung wird das Auflageelement derart weitergebildet, dass es um das Dämpfungsmittel einen Überstand aufweist. Das Auflageelement ragt somit links und rechts über das Dämpfungsmittel hervor und verhindert somit ein Verschieben des Dämpfungsmittels in einer Ebene senkrecht zur Kraftwirkung in Folge von relativen Verschiebungen des ersten Bauteils und des zweiten Bauteils.
Prinzipiell kann das Element auch in horizontaler Richtung wirkend verwendet werden.

Die Erfindung wird anhand eines Ausführungsbeispiels näher erläutert. Komponenten mit denselben Bezugszeichen weisen in der Regel dieselben Eigenschaften auf.

Es zeigen:
- Fig. 1: eine Seitenansicht eines erfindungsgemäßen Systems,
- Fig. 2: eine vergrößerte Schnittansicht des Systems aus Figur 1.

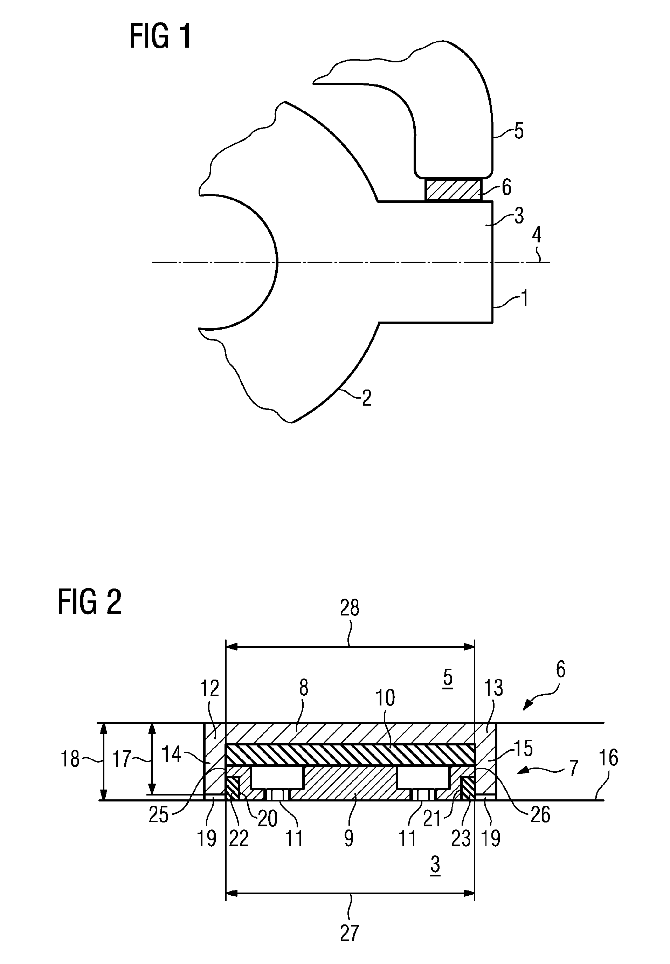

In der Figur 1 ist ein Lager 1 in einem nicht näher dargestellten Rotor spielbehaftet aufgestellt. Das Lager 1 umfasst ein Lageruntergehäuse 2 und ein Lagerobergehäuse 3. Das Lageruntergehäuse 2 und das Lagerobergehäuse 3 ist über eine horizontale Teilfuge 4 miteinander gekoppelt, was in der Figur 1 nicht näher dargestellt ist. Das Lager 1 kann beispielsweise ein Lager für eine Dampfturbine sein.

An das Lager 1 wird ein Gehäuse 5 angekoppelt. Erfindungsgemäß wird das Gehäuse 5 über ein System 6 an das Lagerobergehäuse 3 angeordnet.

Das Lagerobergehäuse 3 kann als ersten Bauteil betrachtet werden. Des Weiteren kann das Gehäuse 5 als zweites Bauteil betrachtet werden.

Das System 6 ist hierbei derart ausgebildet, dass Schwingungen des Lagers 1 über elastische Eigenschaften der Abstützung des Systems 6 gegen das Gehäuse vergleichsweise stark gedämpft werden. Durch die Entkopplungseigenschaften des Systems 6 werden dabei nur vergleichsweise geringe Schwingungen auf das Gehäuse 5 übertragen werden.

Die Figur 2 zeigt einen vergrößerten Ausschnitt des Systems 6 aus Figur 1. Im Wesentlichen umfasst das System ein Verbindungselement 7, das zwischen dem ersten Bauteil und dem zweiten Bauteil angeordnet ist. Im Wesentlichen umfasst das Verbindungselement einen mit dem ersten Bauteil verbindbares Grundelement 8 und ein mit dem zweiten Bauteil verbindbares Auflageelement 9. Zwischen dem Grundelement 8 und dem Auflageelement 9 ist ein Dämpfungsmittel 10 angeordnet.

Das Auflageelement 9 ist aus Stahl ausgebildet und wird über eine Schraubverbindung 11 mit dem Lagerobergehäuse 3 kraftschlüssig verbunden.

Das Grundelement 8 weist umfangsseitig einen Überstand auf, im Schnittbild dargestellt durch einen ersten Überstand 14 an einem ersten Ende 12 und an einem zweiten Ende 13 einen zweiten Überstand 15. Sowohl der erste Überstand 14 als auch der zweite Überstand 15 sind derart ausgebildet, dass ein Verrutschen des Dämpfungsmittel 10 entlang einer Oberfläche 16 des Lagerobergehäuses 3 verhindert ist. Allerdings ist eine Länge 17 des ersten Überstandes 14 und des zweiten Überstandes 15 derart, dass die Länge 17 geringfügig kürzer ist als der Abstand 18 zwischen dem ersten Bauteil 3 und dem zweiten Bauteil 5. Das bedeutet, dass zwischen der Oberfläche 16 und dem ersten Überstand 14 und dem zweiten Überstand 15 ein Spiel 19 entsteht. Die Längen des ersten Überstandes 14 und des zweiten Überstandes 15 und die Materialauswahl des Grundelementes 8 sind dabei derart ausgewählt, dass das Spiel 19 immer groß genug ist, damit das Grundelement 8 nicht mit dem ersten Bauteil 3 in Berührung kommt.

Das Dämpfungsmittel 10 ist aus einem elastischen Material ausgebildet, wie z.B. aus einem Elastomer, wie z. B. ein zelliges Polyurethan.

Des Weiteren weist das Auflageelement 9 eine umlaufende erste Aussparung 20 und eine zweite Aussparung 21 auf, in die jeweils ein weiteres Dämpfungsmittel 22 bzw. 23 angeordnet wird.

Das weitere Dämpfungsmittel 22 bzw. 23 ist ebenfalls aus einem elastischen Material, wie z.B. aus einem Elastomer ausgebildet. Die Anordnung des weiteren Dämpfungsmittels 22 bzw. 23 an dem ersten Ende 12 bzw. zweiten Ende 13 in der Nähe des ersten Überstandes 14 als auch dem zweiten Überstand 15 führt dazu, dass auch zwischen den Elementen 8 und 9 kein direkter Kontakt besteht. Die äußere Länge 27 des Bauteils 9 ist kleiner als die innere Länge 28 des Bauteils 8, so dass zwischen den Bauteilen 8 und 9 Spiele 25 und 26 bestehen. Dadurch wird die Übertragung von Körperschall verhindert und es treten keine ungewünschten akustischen Effekte auf.

Das Grundelement 8 ist ebenfalls aus einem Stahl hergestellt.

## Patentansprüche

1. System (6) zur Anbindung eines ersten Bauteils (3) mit einem zweiten Bauteil (5),
wobei zwischen dem ersten Bauteil (3) und dem zweiten Bauteil (5) ein Verbindungselement (7) angeordnet ist,
wobei das Verbindungselement (7) einen mit dem ersten Bauteil (3) verbindbares Grundelement (8) und ein mit dem zweiten Bauteil (5) verbindbares Auflageelement (9) aufweist,
wobei zwischen dem Grundelement (8) und dem Auflageelement (9) ein Dämpfungsmittel (10) angeordnet ist.

2. System (6) nach Anspruch 1,
wobei das Dämpfungsmittel (10) aus einem elastischen Material ausgebildet ist.

3. System (6) nach Anspruch 2,
wobei das Dämpfungsmittel (10) ein Elastomer ist.

4. System (6) nach Anspruch 1, 2 oder 3,
wobei das Auflageelement (9) einen um das Dämpfungsmittel (10) ragenden Überstand aufweist.

5. System (6) nach einem der vorhergehenden Ansprüche,
wobei das Grundelement (8) mit dem ersten Bauteil (3) mittels Schrauben verschraubt ist.

6. System (6) nach einem der vorhergehenden Ansprüche,
wobei das erste Bauteil (36) als Lagergehäuse (3) ausgebildet ist.

7. System (6) nach einem der vorhergehenden Ansprüche,
wobei das zweite Bauteil (5) als Gehäuse (5) ausgebildet ist.
